# EUROPEAN PATENT APPLICATION

(11) **EP 4 822 969 A1**
(43) Date of publication of application: **14.10.2026**
(21) Application number: 24919925.8
(22) Date of filing: 09.12.2024
(51) Int. Cl.: H02M 1/32

(54) **SURGE PROTECTION METHOD AND APPARATUS FOR FULLY CONTROLLED VALVE IN CONTROLLABLE LINE-COMMUTATED CONVERTER, COMPUTER DEVICE, COMPUTER READABLE STORAGE MEDIUM AND COMPUTER PROGRAM PRODUCT**

(30) Priority: 26.01.2024 CN 202410115378
(71) Applicant: China Electric Power Research Institute, Beijing 102209 (CN)
(72) Inventor: HE, Zhiyuan, Beijing 102209 (CN); GAO, Chong, Beijing 102209 (CN); GUO, Xianshan, Beijing 102209 (CN); WANG, Chenghao, Beijing 102209 (CN); LI, Tingting, Beijing 102209 (CN); LU, Jianliang, Beijing 102209 (CN); YANG, Jun, Beijing 102209 (CN)
(74) Representative: Cabinet Camus Lebkiri
(86) International application number: PCT/CN2024/137796
(87) International publication number: WO 2025/156847

(57) **Abstract**

The present disclosure relates to the technical field of high-voltage direct-current power transmission, and provides a surge protection method and apparatus for a fully controlled valve in a controllable line-commuted converter, a computer device, a computer readable storage medium and a computer program product. The method comprises: monitoring a terminal voltage of a fully controlled valve in real time; when a wave turn-off voltage per cycle of a primary IGBT valve exceeds an operating voltage of a surge arrester, subtracting 1 from an available action count of the surge arrester of the primary IGBT valve, and when a wave turn-off voltage per cycle of a secondary IGBT valve exceeds an operating voltage of a surge arrester, subtracting 1 from an available action count of the surge arrester of the secondary IGBT valve; when the available action count of the surge arrester of the primary IGBT valve is less than a second preset count, or when the available action count of the surge arrester of the secondary IGBT valve is less than the second preset count, controlling a converter to return to a power grid line-commutation operation mode; and when the available action count of the surge arrester of the primary IGBT valve is greater than a third preset count, or when the available count of the surge arrester of the secondary IGBT valve is greater than the third preset count, controlling the converter to enter a controllable line-commutation operation mode.

## Description

### CROSS-REFERENCE TO RELATED APPLICATION(S)

Embodiments of the present disclosure are filed based on Chinese Patent Application No. 202410115378.X, filed on January 26, 2024, entitled "ARRESTER PROTECTION METHOD AND APPARATUS FOR FULLY-CONTROLLED VALVE OF CONTROLLABLE LINE-COMMUTATED CONVERTER", and claim priority to the Chinese Patent Application, the entire contents of the Chinese Patent Application are incorporated herein by reference.

### TECHNICAL FIELD

The present disclosure relates to, but is not limited to, the technical field of high voltage direct current transmission, and in particular, to an arrester protection method and apparatus for a fully-controlled valve of a controllable line-commutated converter, a computer device, a computer-readable storage medium, and a computer program product.

### BACKGROUND

Line-commutated converter high voltage direct current (LCC-HVDC) transmission technologies have advantages such as large transmission capacity, long transmission distance, high efficiency, low losses, and small footprint, and have been widely adopted worldwide. In a case where alternating current (AC) system faults or other reasons cause distortion or a drop in an AC bus voltage of a converter station at a receiving end of an LCC-HVDC system, thyristors cannot be reliably turned off (that is, a commutation failure occurs in a converter) due to the semi-controlled characteristic of basic components, namely the thyristors. This is a unique fault mode of the conventional line-commutated converter (LCC). To solve the commutation failure problem, a novel controllable line-commutated converter (CLCC) topology with controllable turn-off capability has been developed. This topology adopts a hybrid configuration of a fully-controlled device, namely an insulated-gate bipolar transistor (IGBT), and a semi-controlled device, namely a thyristor, and uses the IGBT to assist in the reliable recovery and turn-off of the thyristor, thereby achieving controllable commutation between bridge arms.

In a case where there is no AC fault in the system, the converter valves operate in a normal alternating-operation control timing. Operating voltages of fully-controlled valves in a main branch and auxiliary branch are lower than operating voltages of arresters, and current flowing through the arresters is leakage current, so that the arresters do not absorb energy. If abnormal conditions occur, such as abnormal turn-on or turn-off of sub-valves, or faults in a valve control system, the IGBT may turn off a high current, and then the high current is commutated to the arrester branch, causing the arrester to absorb energy by means of periodic or continuous operation. Eventually, the arrester will be damaged when the absorbed energy reaches an energy upper limit, thereby affecting the normal operation of the converter valve.

In a case where the AC fault occurs in the system, the controllable line-commutated converter valve operates in a forced commutation control timing. In this timing, the fully-controlled valve of the controllable line-commutated converter actively turns off the high current, and the arrester connected in parallel with the fully-controlled valve conducts the high current to establish a voltage, to facilitate commutation between the main and auxiliary branches or between the bridge arms. The arrester absorbs energy during this process, but the absorbed energy will not exceed its withstand capability. The abnormal conditions, such as abnormal turn-on or turn-off of the sub-valves, or faults in the valve control system, cause abnormal energy absorption in the arrester, and the arrester will be damaged when the absorbed energy reaches the energy upper limit, thereby affecting the normal operation of the converter valve.

### SUMMARY

The technical problem to be solved by the present disclosure is to overcome the defect in the related art that abnormal conditions, such as abnormal turn-on or turn-off of sub-valves, or faults in a valve control system, cause abnormal energy absorption in an arrester, and the arrester will be damaged when the absorbed energy reaches the energy upper limit, thereby affecting the normal operation of a converter valve. Therefore, an arrester protection method and apparatus for a fully-controlled valve of a controllable line-commutated converter, a computer device, a computer-readable storage medium, and a computer program product are provided.

In order to achieve the above purpose, the following technical solutions are provided in the present disclosure.

In a first aspect, an arrester protection method for a fully-controlled valve of a controllable line-commutated converter is provided in the embodiments of the present disclosure. Each bridge arm of the converter includes a main branch and an auxiliary branch connected in parallel. The main branch includes a main thyristor valve and a main IGBT valve connected in series. The auxiliary branch includes an auxiliary IGBT valve and an auxiliary thyristor valve connected in series. Each of the main IGBT valve and the auxiliary IGBT valve is connected in parallel with an arrester. The arrester protection method for the fully-controlled valve of the controllable line-commutated converter includes: monitoring a terminal voltage of the fully-controlled valve in real time, subtracting 1 from an available operation count of the arrester for the main IGBT valve in response to a per-cycle turn-off voltage of the main IGBT valve exceeding an operating voltage of the arrester, subtracting 1 from an available operation count of the arrester for the auxiliary IGBT valve in response to a per-cycle turn-off voltage of the auxiliary IGBT valve exceeding an operating voltage of the arrester, increasing the available operation counts of the arresters by a first preset count at intervals of a first preset time; controlling the converter to return to a line-commutated operating mode in response to the available operation count of the arrester for the main IGBT valve being less than a second preset count, or controlling the converter to return to the line-commutated operating mode in response to the available operation count of the arrester for the auxiliary IGBT valve being less than the second preset count; and controlling the converter to enter a controllable line-commutated operating mode in response to the available operation count of the arrester for the main IGBT valve being greater than a third preset count, or controlling the converter to enter the controllable line-commutated operating mode in response to the available operation count of the arrester for the auxiliary IGBT valve being greater than the third preset count.

In some implementations, the first preset time and the first preset count satisfy the following relationships: $M = W / Ws ,$ $N \leq M ,$ $a \geq b \times \frac{H}{N} ;$ herein, W represents a designed rated energy of the arrester; Ws represents a maximum energy normally absorbed by the arrester in a single operation; N represents an initial value of the available operation count set for the arrester; a represents the first preset time; b represents the first preset count; and H represents a time interval from when the arrester absorbs energy up to a limit once to when the arrester absorbs energy up to the limit again.

In some implementations, in response to the converter operating in the controllable line-commutated operating mode, the arrester protection method for the fully-controlled valve of the controllable line-commutated converter further includes: monitoring a terminal voltage of the main IGBT valve in real time; determining that the arrester for the main IGBT valve is in an overvoltage state in response to the terminal voltage of the main IGBT valve continuously exceeding a first voltage reference value for a third preset time; and actively triggering the main IGBT valve into conduction.

In some implementations, the arrester protection method for the fully-controlled valve of the controllable line-commutated converter further includes: determining that the converter operates abnormally and controlling the converter to permanently revert to the line-commutated operating mode in response to a cumulative number of times that the terminal voltage of the main IGBT valve is higher than a second voltage reference value reaching a fourth preset count within a period of time.

In some implementations, in response to the converter operating in the controllable line-commutated operating mode, the arrester protection method for the fully-controlled valve of the controllable line-commutated converter further includes: monitoring a terminal voltage of the auxiliary IGBT valve in real time; determining that the arrester for the auxiliary IGBT valve is in an overvoltage state in response to the terminal voltage of the auxiliary IGBT valve continuously exceeding a third voltage reference value for a fourth preset time; and actively triggering the auxiliary IGBT valve into conduction.

In some implementations, the arrester protection method for the fully-controlled valve of the controllable line-commutated converter further includes: determining that the converter operates abnormally and controlling the converter to permanently revert to the line-commutated operating mode in response to a cumulative number of times that the terminal voltage of the auxiliary IGBT valve is higher than a fourth voltage reference value reaching a fourth preset count within a period of time.

In a second aspect, an arrester protection apparatus for a fully-controlled valve of a controllable line-commutated converter, based on the method in the first aspect and any implementation of the first aspect, is provided in the embodiments of the present disclosure. The arrester protection apparatus for the fully-controlled valve of the controllable line-commutated converter includes: a monitoring module configured to monitor a terminal voltage of the fully-controlled valve in real time, subtract 1 from an available operation count of an arrester for a main IGBT valve in response to a per-cycle turn-off voltage of the main IGBT valve exceeding an operating voltage of the arrester, subtract 1 from an available operation count of an arrester for an auxiliary IGBT valve in response to a per-cycle turn-off voltage of the auxiliary IGBT valve exceeding an operating voltage of the arrester, and increase the available operation counts of the arresters by a first preset count at intervals of a first preset time; a first switching module configured to control the converter to return to a line-commutated operating mode in response to the available operation count of the arrester for the main IGBT valve being less than a second preset count, or control the converter to return to the line-commutated operating mode in response to the available operation count of the arrester for the auxiliary IGBT valve being less than the second preset count; and a second switching module configured to control the converter to enter a controllable line-commutated operating mode in response to the available operation count of the arrester for the main IGBT valve being greater than a third preset count, or control the converter to enter the controllable line-commutated operating mode in response to the available operation count of the arrester for the auxiliary IGBT valve being greater than the third preset count.

In some implementations, the arrester protection apparatus for the fully-controlled valve of the controllable line-commutated converter further includes: a first single-cycle continuous overvoltage protection module configured to monitor a terminal voltage of the main IGBT valve in real time, determine that the arrester for the main IGBT valve is in an overvoltage state in response to the terminal voltage of the main IGBT valve continuously exceeding a first voltage reference value for a third preset time, and actively trigger the main IGBT valve into conduction; and a second single-cycle continuous overvoltage protection module configured to monitor a terminal voltage of the auxiliary IGBT valve in real time, determine that the arrester for the auxiliary IGBT valve is in an overvoltage state in response to the terminal voltage of the auxiliary IGBT valve continuously exceeding a third voltage reference value for a fourth preset time, and actively trigger the auxiliary IGBT valve into conduction.

In some implementations, the arrester protection apparatus for the fully-controlled valve of the controllable line-commutated converter further includes: a first multi-cycle continuous overvoltage protection module configured to determine that the converter operates abnormally and control the converter to permanently revert to the line-commutated operating mode in response to a cumulative number of times that the terminal voltage of the main IGBT valve is higher than a second voltage reference value reaching a fourth preset count within a period of time; and a second multi-cycle continuous overvoltage protection module configured to determine that the converter operates abnormally and control the converter to permanently revert to the line-commutated operating mode in response to a cumulative number of times that the terminal voltage of the auxiliary IGBT valve is higher than a fourth voltage reference value reaching the fourth preset count within a period of time.

In a third aspect, a computer device is provided in the embodiments of the present disclosure. The computer device includes: at least one processor, and a memory communicatively connected to the at least one processor. The memory stores instructions executable by the at least one processor. The instructions, upon being executed by the at least one processor, enable the at least one processor to perform the arrester protection method for the fully-controlled valve of the controllable line-commutated converter in the first aspect of the embodiments of the present disclosure and any implementation of the first aspect.

In a fourth aspect, a computer-readable storage medium storing computer instructions is provided in the embodiments of the present disclosure. The computer instructions are used to enable a computer to perform the arrester protection method for the fully-controlled valve of the controllable line-commutated converter in the first aspect of the embodiments of the present disclosure and any optional implementation of the first aspect.

In a fifth aspect, a computer program product is provided in the embodiments of the present disclosure. The computer program product includes a computer program or instructions. The computer program or instructions, upon run on a computer device, enable the computer device to perform the arrester protection method for the fully-controlled valve of the controllable line-commutated converter in the first aspect of the embodiments of the present disclosure and any implementation of the first aspect.

Beneficial effects:
the present disclosure provides, for a controllable line-commutated converter valve capable of resisting commutation failure, an arrester protection strategy for a fully-controlled valve of a controllable line-commutated converter. In response to different operating conditions or different operation timings, based on the operating characteristics of the fully-controlled sub-valves under different fault conditions of the fully-controlled valves, arresters for the fully-controlled sub-valves are protected from damage by limiting the cumulative number of times or duration of overvoltage events on the arresters and adopting different protective actions, thereby improving the operation reliability of the converter valve.

### BRIEF DESCRIPTION OF THE DRAWINGS

In order to more clearly describe technical solutions in the detailed description of the present disclosure or in the related art, the accompanying drawings to be used in the detailed description or in the related art will be introduced briefly below. However, the accompanying drawings to be described below are merely some implementations of the present disclosure, and those of ordinary skill in the art, without paying any creative effort, may obtain other accompanying drawings according to these accompanying drawings.
FIG. 1 is a schematic diagram showing a structure of a controllable line-commutated converter provided in embodiments of the present disclosure;
FIG. 2 is a flow chart of an arrester protection method for a fully-controlled valve of a controllable line-commutated converter provided in embodiments of the present disclosure; and
FIG. 3 is a schematic diagram showing a structure of a computer device provided in embodiments of the present disclosure.

### DETAILED DESCRIPTION

The technical solutions in the present disclosure are clearly and completely described below with reference to the accompanying drawings. However, the described embodiments are merely some, but not all, embodiments of the present disclosure. All other embodiments obtained based on the embodiments of the present disclosure by those of ordinary skill in the art without paying any creative effort will fall within the protection scope of the present disclosure.

Furthermore, the technical features involved in the different implementations of the present disclosure described below may be combined with each other as long as they do not conflict with each other.

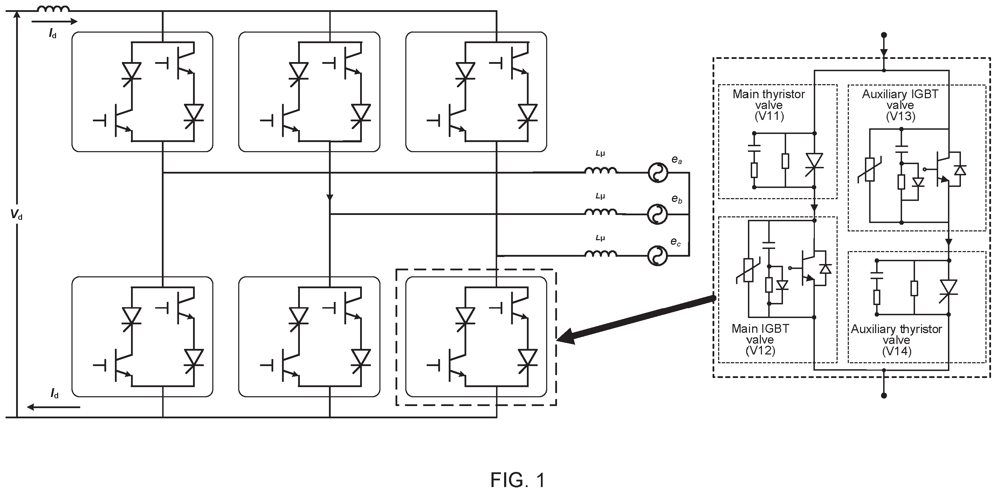

An arrester protection method for a fully-controlled valve of a controllable line-commutated converter is provided in the embodiments of the present disclosure. As shown in FIG. 1, each bridge arm of the controllable line-commutated converter is formed by a main branch and an auxiliary branch connected in parallel. The main branch is formed by a main thyristor valve V11 and a main IGBT valve V12 connected in series, and the auxiliary branch is formed by an auxiliary IGBT valve V13 and an auxiliary thyristor valve V14 connected in series. Each of the main IGBT valve and the auxiliary IGBT valve is connected in parallel with an arrester.

The controllable line-commutated converter has two operating modes: a line-commutated operating mode (also referred to as a line-commutated converter (LCC) operating mode) and a controllable line-commutated operating mode (also referred to as a controllable line-commutated converter (CLCC) operating mode), as detailed below.

The LCC operating mode: the fully-controlled valve (V12) in the main branch of the bridge arm of the controllable line-commutated converter is blocked; a bypass thyristor valve connected in parallel with the fully-controlled valve is put into operation and triggered to conduct simultaneously with the thyristor valve in the main branch; the auxiliary branch is blocked; the main branch of each bridge arm operates as a conventional LCC converter valve; and line commutation is performed.

The CLCC operating mode: the IGBT valve in the main branch of the bridge arm of the controllable line-commutated converter, and the auxiliary branch of the bridge arm of the controllable line-commutated converter are put into operation; the bypass thyristor valve connected in parallel with the IGBT valve in the main branch is blocked; and a switching timing of each branch has the following two scenarios based on whether an AC fault occurs.

Normal alternating operation: in a case where no AC fault is detected, a turn-off moment of a V12 sub-valve is a moment when a bridge arm current drops to a certain low reference value, and a turn-off moment of the auxiliary branch is determined based on a delay time from the turn-off moment of V12.

Forced commutation operation: after the AC fault is detected, the V12 sub-valve is turned off at a commutation start moment (i.e., a moment when a control pulse (CP) signal of another bridge arm participating in commutation is issued); during the AC fault, the turn-off moment of V12, and a turn-on moment of V14 and a turn-off moment of V13 in the auxiliary branch are shifted forward as a whole, and their delay times relative to the turn-off moment of V12 remain unchanged.

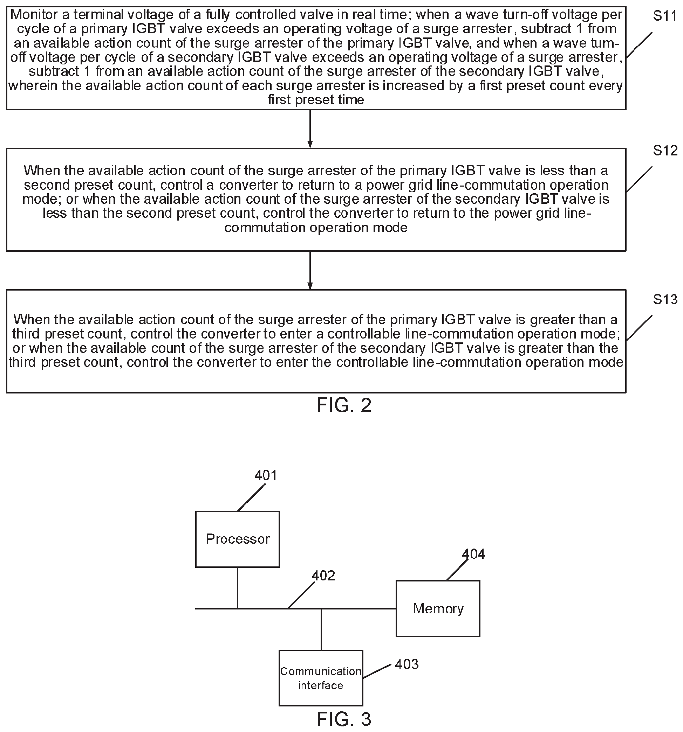

The protection strategies, for the arrester for the fully-controlled valve, provided in the embodiments of the present disclosure, are mainly classified into two types: one is for an abnormal condition where the energy absorption of the arrester in a single cycle is normal but the duration is excessively long, and the other is mainly for an abnormal condition where the abnormal energy absorption of the arrester in a single cycle results in energy exceeding the limit. A valve control system needs to have a function of monitoring a terminal voltage of the fully-controlled valve. As shown in FIG. 2, for the abnormal condition where the energy absorption of the arrester in the single cycle is normal but the duration is excessively long, the arrester protection method includes the following.

In step S11, a terminal voltage of the fully-controlled valve is monitored in real time; in response to a per-cycle turn-off voltage of the main IGBT valve exceeding an operating voltage of an arrester, an available operation count of the arrester for the main IGBT valve is reduced by 1; in response to a per-cycle turn-off voltage of the auxiliary IGBT valve exceeding an operating voltage of an arrester, an available operation count of the arrester for the auxiliary IGBT valve is reduced by 1; the available operation counts of the arresters are increased by a first preset count at intervals of a first preset time.

In step S12, in response to the available operation count of the arrester for the main IGBT valve being less than a second preset count, the converter is controlled to return to the line-commutated operating mode; alternatively, in response to the available operation count of the arrester for the auxiliary IGBT valve being less than the second preset count, the converter is controlled to return to the line-commutated operating mode.

In step S13, in response to the available operation count of the arrester for the main IGBT valve being greater than a third preset count, the converter is controlled to enter the controllable line-commutated operating mode; alternatively, in response to the available operation count of the arrester for the auxiliary IGBT valve being greater than the third preset count, the converter is controlled to enter the controllable line-commutated operating mode.

Specifically, it is known that a designed rated energy of the arrester is W, and a time interval from when the arrester absorbs energy up to a limit once to when the arrester absorbs energy up to the limit again is H. The time interval H ensures that the arrester can sufficiently dissipate heat after absorbing energy up to its limit for the first time. Assuming that in a case where the converter valve operates in a controllable commutation operation timing, a maximum energy normally absorbed by the arrester for the fully-controlled valve in a single operation is Ws. An available operation count x is set for the arrester, with an initial value of N. There are the following relationships: $M = W / Ws$ (1) $N \leq M$ (2)

Note: In consideration of an appropriate margin, N is an integer less than or equal to M.

During operation, the valve control system dynamically adjusts the available operation count x of the arrester. The valve control system monitors the terminal voltage of the fully-controlled valve in real time. In response to the per-cycle turn-off voltage exceeding the operating voltage U_{MOV}, the available operation count is reduced by 1. In response to the available operation count x being less than or equal to 4 (i.e., x ≤ 4), the converter returns to the line-commutated operating mode, and the converter re-enters the controllable line-commutated operating mode after a condition where the available operation count x being greater than or equal to 5 (i.e., x ≥ 5) is satisfied. The valve control system automatically increases the available operation count by b (i.e., the first preset count) every unit time a (i.e., the first preset time), but the available operation count cannot exceed the upper limit N, with the following relationship: $a \geq b \times \frac{H}{N}$ (3)

The protection strategy based on the available operation count of the arrester for fully-controlled valve is described by considering the arresters for the fully-controlled valves in the main and auxiliary branches in an in-service project as an example.

For the arrester for the fully-controlled valve in the main branch, a time interval from when the selected arrester for the V12 sub-valve absorbs energy up to a limit once to when the selected arrester for the V12 sub-valve absorbs energy up to the limit again is 4 hours, and the arrester has a rated energy of 456 kJ. In a case where the converter valve operates in the controllable commutation operation timing, the maximum energy normally absorbed by the arrester for the fully-controlled valve in a single operation is about 3.5 kJ. The initial value is designed as 120 (i.e., the upper limit). During operation, the valve control system dynamically adjusts the available operation count. The valve control system monitors a terminal voltage of the V12 sub-valve in real time. In response to the turn-off voltage of the V12 sub-valve exceeding an operating voltage U_{MOV12} of the arrester, the available operation count is reduced by 1. In response to the available operation count being less than or equal to 4, the converter returns to the line-commutated operating mode, and the converter re-enters the controllable line-commutated operating mode after a condition where the available operation count being greater than or equal to 5 is satisfied. The valve control system automatically increases the available operation count by 5 every 10 min, but the available operation count cannot exceed the upper limit.

Similarly, for the arrester for the fully-controlled valve in the auxiliary branch, a time interval from when the selected arrester absorbs energy up to a limit once to when the selected arrester absorbs energy up to the limit again is 4 hours, and the arrester has a rated energy of 6 MJ. In a case where the converter valve operates in the controllable commutation operation timing, the maximum energy normally absorbed by the arrester for the fully-controlled valve in a single operation is about 300 kJ. The initial value is designed as 20 (i.e., the upper limit). During operation, the valve control system dynamically adjusts the available operation count. The valve control system monitors a terminal voltage of the V13 sub-valve in real time. In response to the turn-off voltage of the V13 sub-valve exceeding an operating voltage U_{MOV13} of the arrester, the available operation count is reduced by 1. In response to the available operation count being less than or equal to 4, the converter returns to the line-commutated operating mode, and the converter re-enters the controllable line-commutated operating mode after a condition where the available operation count being greater than or equal to 5 is satisfied. The valve control system automatically increases the available operation count by 2 every 30 min, but the available operation count cannot exceed the upper limit.

For the abnormal condition where the abnormal energy absorption of the arrester in a single cycle results in energy exceeding the limit, the present disclosure provides two protection strategies: a single-cycle continuous overvoltage protection strategy and a multi-cycle continuous overvoltage protection strategy, as detailed below.

In a case where the converter operates in the controllable line-commutated operating mode, the single-cycle continuous overvoltage protection strategy for the main IGBT valve includes: (1) monitoring a terminal voltage of the main IGBT valve in real time; (2) in response to the terminal voltage of the main IGBT valve continuously exceeding a first voltage reference value for a third preset time, determining that the arrester for the main IGBT valve is in an overvoltage state; (3) actively triggering the main IGBT valve into conduction.

In a case where the converter operates in the controllable line-commutated operating mode, the single-cycle continuous overvoltage protection strategy for the auxiliary IGBT valve includes: (1) monitoring a terminal voltage of the auxiliary IGBT valve in real time; (2) in response to the terminal voltage of the auxiliary IGBT valve continuously exceeding a third voltage reference value for a fourth preset time, determining that the arrester for the auxiliary IGBT valve is in an overvoltage state; (3) actively triggering the auxiliary IGBT valve into conduction.

Specifically, in a case where the converter valve operates in the controllable line-commutated operating mode and the valve control system receives an AC fault signal, the converter operates in a forced commutation operation timing. There is a fault condition in which the current remains in the fully-controlled valve arrester branch, and the fully-controlled sub-valve is continuously in the overvoltage state. In a case where the current flowing through the arrester is high, the arrester absorbs energy rapidly, and may quickly reach its energy absorption limit within a single cycle. To prevent damage to the arrester, the valve control system is required to make a determination by real-time monitoring of the terminal voltage of the fully-controlled sub-valve, and to perform protective triggering on the IGBT of the fully-controlled sub-valve.

In response to the valve control system detecting that the terminal voltage of the fully-controlled valve is higher than a voltage reference value Urefs for a duration of Ts, the valve control system determines that the arrester for the fully-controlled valve is in the overvoltage state and actively triggers the IGBT of the fully-controlled valve into conduction. $Ts_down \leq Ts \leq Ts_up$ (4) $Urefs_down \leq Urefs \leq Urefs_up$ (5)

Herein, Ts_down represents a continuous operating time of the arrester in the normal forced commutation operation timing; Ts_up represents an operating time of the arrester when the arrester absorbs energy up to the energy upper limit under the abnormal condition; Urefs_down represents the operating voltage of the arrester, and Urefs_up represents a peak voltage in normal forced commutation operation.

In a case where the converter operates in the controllable line-commutated operating mode, the multi-cycle continuous overvoltage protection strategy for the main IGBT valve includes: in response to a cumulative number of times that the terminal voltage of the main IGBT valve is higher than a second voltage reference value reaching a fourth preset count, determining that the converter operates abnormally, and controlling the converter to permanently revert to the line-commutated operating mode.

In a case where the converter operates in the controllable line-commutated operating mode, the multi-cycle continuous overvoltage protection strategy for the auxiliary IGBT valve includes: in response to a cumulative number of times that the terminal voltage of the auxiliary IGBT valve is higher than a fourth voltage reference value reaching the fourth preset count within a period of time, determining that the converter operates abnormally, and controlling the converter to permanently revert to the line-commutated operating mode.

Specifically, in a case where the converter valve operates in the controllable line-commutated operating mode and the valve control system does not receive an AC fault signal, the converter operates in the normal alternating operation timing. The V12 sub-valve generally does not experience frequent overvoltage. If a failure occurs in a measuring device or control system, the terminal voltage of the fully-controlled valve rises and is significantly higher than the voltage in normal operation, which even causes the arrester to periodically absorb energy, possibly reaching its energy upper limit. To avoid damage to the arrester caused by its continuous energy absorption under this abnormal condition, the valve control system is required to make a determination by real-time monitoring of the terminal voltage of the fully-controlled sub-valve, and to permanently revert to the line-commutated operating mode.

In response to the valve control system detecting that the cumulative number of times that the terminal voltage of the fully-controlled valve exceeds a voltage reference value Urefm reaches D within a time period Tm, the valve control system determines that the operation is abnormal and permanently reverts to the line-commutated operating mode. $Urefm_down \leq Urefm \leq Urefm_up$ (6)

Herein, Urefm_down represents a peak terminal voltage in normal operation, and Urefm_up represents the operating voltage of the arrester. In a case of no AC fault, values of Tm and D are mainly determined based on a failure rate of the valve control system for different engineering projects.

The abnormal condition where the abnormal energy absorption of the arrester in a single cycle results in energy exceeding the limit is described by considering the arresters for the fully-controlled valves in the main and auxiliary branches in an in-service project as an example.

### 1. Arrester protection strategy for the fully-controlled valve in the main branch

A peak terminal voltage of the V12 sub-valve in normal operation is about 15 kV, and a peak terminal voltage of the V12 sub-valve in normal forced commutation operation is about 27 kV. The operating voltage of the arrester is 20.9 kV, and a rated energy of the arrester is 456 kJ. It is known that the maximum duration for which the voltage of the arrester for the V12 sub-valve in the normal forced commutation operation timing exceeds 24 kV is 123 µs. Considering the most severe fault condition where the current cannot be commutated from the main branch to the auxiliary branch when the system fault current reaches its maximum, the arrester for the V12 sub-valve will absorb approximately 400 kJ of energy within 8.5 ms. Considering an appropriate energy margin, the following relationships exist. $0.123 ms \leq Ts \leq 8.5 ms$ (7) $20.9 kV \leq Urefs \leq 27 kV$ (8) $15 kV \leq Urefm \leq 20.9 kV$ (9)

Considering an appropriate energy margin, the voltage reference value Urefs for single-cycle continuous overvoltage of the V12 sub-valve is set to 24 kV, and the duration Ts is set to 2 ms. In response to the valve control system determining that the V12 sub-valve satisfies the protection condition, the valve control system actively triggers the IGBT into conduction.

In a case where the converter valve operates in the controllable line-commutated operating mode with the normal alternating operation timing, a failure of the measuring device or control system may cause the valve control system to determine that the V12 sub-valve has an abnormal situation of multi-cycle continuous overvoltage. In the absence of the AC fault signal, if the valve control system detects that the V12 sub-valve experiences 10 overvoltage events within 5 seconds (with the voltage reference value Urefm set to 20.9 kV), the converter valve permanently reverts to the line-commutated operating mode.

### 2. Arrester protection strategy for the fully-controlled valve in the auxiliary branch

A peak terminal voltage of the V13 sub-valve in normal operation is about 25 kV, and a peak terminal voltage of the V13 sub-valve in normal forced commutation operation is about 279 kV. The operating voltage of the arrester is 212 kV, and a rated energy of the arrester is 6500 kJ. It is known that the maximum duration for which the voltage of the arrester for the V13 sub-valve in the normal forced commutation operation timing exceeds 240 kV is 1550 µs. Considering the most severe fault condition where the current cannot be commutated to the next bridge arm when the system fault current reaches its maximum, the arrester for the V13 sub-valve will absorb approximately 3000 kJ of energy within 5 ms. The following relationships exist. $1.55 ms \leq Ts \leq 5 ms$ (10) $212 kV \leq Urefs \leq 279 kV$ (11) $25 kV \leq Urefm \leq 212 kV$ (12)

Considering an appropriate energy margin, the voltage reference value Urefs for single-cycle continuous overvoltage of the V13 sub-valve is set to 240 kV, and the duration Ts is set to 3.5 ms. In response to the valve control system determining that the V13 sub-valve satisfies the protection condition, the valve control system actively triggers the IGBT into conduction.

In a case where the converter valve operates in the controllable line-commutated operating mode with the normal alternating operation timing, a failure of the measuring device or control system may cause the valve control system to determine that the V13 sub-valve has an abnormal situation of multi-cycle continuous overvoltage. In the absence of the AC fault signal, if the valve control system detects that the V13 sub-valve experiences 10 overvoltage events within 5 seconds (with the voltage reference value Urefm set to 150 kV), the converter valve permanently reverts to the line-commutated operating mode.

An arrester protection apparatus for a fully-controlled valve of a controllable line-commutated converter, based on the methods in the claims, the embodiments described above, and any implementation of the embodiments, is provided in the embodiments of the present disclosure. The arrester protection apparatus for the fully-controlled valve of the controllable line-commutated converter includes the following.

A monitoring module is configured to: monitor a terminal voltage of the fully-controlled valve in real time; in response to a per-cycle turn-off voltage of a main IGBT valve exceeding an operating voltage of an arrester, subtract 1 from an available operation count of the arrester for the main IGBT valve; in response to a per-cycle turn-off voltage of an auxiliary IGBT valve exceeding an operating voltage of an arrester, subtract 1 from an available operation count of the arrester for the auxiliary IGBT valve; and increase the available operation counts of the arresters by a first preset count at intervals of a first preset time. This module performs the method described in the embodiments mentioned above, and details will not be repeated herein.

A first switching module is configured to: in response to the available operation count of the arrester for the main IGBT valve being less than a second preset count, control the converter to return to a line-commutated operating mode; or in response to the available operation count of the arrester for the auxiliary IGBT valve being less than the second preset count, control the converter to return to the line-commutated operating mode. This module performs the method described in the embodiments mentioned above, and details will not be repeated herein.

A second switching module is configured to: in response to the available operation count of the arrester for the main IGBT valve being greater than a third preset count, control the converter to enter a controllable line-commutated operating mode; or in response to the available operation count of the arrester for the auxiliary IGBT valve being greater than the third preset count, control the converter to enter the controllable line-commutated operating mode. This module performs the method described in the embodiments mentioned above, and details will not be repeated herein.

In some implementations, the arrester protection apparatus for the fully-controlled valve of the controllable line-commutated converter further includes the following.

A first single-cycle continuous overvoltage protection module is configured to: monitor a terminal voltage of the main IGBT valve in real time; in response to the terminal voltage of the main IGBT valve continuously exceeding a first voltage reference value for a third preset time, determine that the arrester for the main IGBT valve is in an overvoltage state; and actively trigger the main IGBT valve into conduction. This module performs the method described in the embodiments mentioned above, and details will not be repeated herein.

A second single-cycle continuous overvoltage protection module is configured to: monitor a terminal voltage of the auxiliary IGBT valve in real time; in response to the terminal voltage of the auxiliary IGBT valve continuously exceeding a third voltage reference value for a fourth preset time, determine that the arrester for the auxiliary IGBT valve is in an overvoltage state; and actively trigger the auxiliary IGBT valve into conduction. This module performs the method described in the embodiments mentioned above, and details will not be repeated herein.

In some implementations, the arrester protection apparatus for the fully-controlled valve of the controllable line-commutated converter further includes the following.

A first multi-cycle continuous overvoltage protection module is configured to: in response to a cumulative number of times that the terminal voltage of the main IGBT valve is higher than a second voltage reference value reaching a fourth preset count within a period of time, determine that the converter operates abnormally, and control the converter to permanently revert to the line-commutated operating mode. This module performs the method described in the embodiments mentioned above, and details will not be repeated herein.

A second multi-cycle continuous overvoltage protection module is configured to: in response to a cumulative number of times that the terminal voltage of the auxiliary IGBT valve is higher than a fourth voltage reference value reaching the fourth preset count within a period of time, determine that the converter operates abnormally, and control the converter to permanently revert to the line-commutated operating mode. This module performs the method described in the embodiments mentioned above, and details will not be repeated herein.

In the embodiments of the present disclosure and other embodiments, the term "module" may be a portion of a circuit, a portion of a processor, a portion of a program or software or the like, and may of course be a unit, a module or a non-modular one.

A computer device is provided in the embodiments of the present disclosure. As shown in FIG. 3, the computer device includes: at least one processor 401 (e.g., a central processing unit (CPU)), at least one communication interface 403, a memory 404, and at least one communication bus 402. The communication bus 402 is used to enable communication connection between these components. The communication interface 403 may include a display and a keyboard. Optionally, the communication interface 403 may further include a standard wired interface and a wireless interface. The memory 404 may include a high-speed random access memory (RAM) or a volatile random-access memory, or a non-volatile memory (e.g., at least one magnetic disk storage). Optionally, the memory 404 may further include at least one storage device located remotely from the processor 401. The processor 401 may perform the arrester protection method for the fully-controlled valve of the controllable line-commutated converter in the embodiments described above and any optional implementation thereof. A set of program codes is stored in the memory 404, and processor 401 invokes the program codes stored in the memory 404 to perform the arrester protection method for the fully-controlled valve of the controllable line-commutated converter in the embodiments described above and any optional implementation thereof.

The communication bus 402 may include a peripheral component interconnect (PCI) bus or an extended industry standard architecture (EISA) bus, etc. The communication bus 402 may include an address bus, a data bus, a control bus, and the like. For convenience of representation, only one line is used in FIG. 3, but this does not mean that there is only one bus or only one type of bus.

The memory 404 may include a volatile memory, such as a random-access memory (RAM). The memory may also include a non-volatile memory, such as a flash memory, a hard disk drive (HDD) or a solid-state drive (SSD). The memory 404 may also include a combination of the above types of memories.

The processor 401 may be a central processing unit (CPU), a network processor (NP), or a combination of a CPU and an NP.

The processor 401 may further include hardware chips. The hardware chip may include an application-specific integrated circuit (ASIC), a programmable logic device (PLD), or a combination thereof. The PLD may include a complex programmable logic device (CPLD), a field-programmable gate array (FPGA), a generic array logic (GAL), or any combination thereof.

Optionally, the memory 404 is also used to store program instructions. The processor 401 may invoke the program instructions to perform the arrester protection method for the fully-controlled valve of the controllable line-commutated converter in the embodiments described above and any optional implementation thereof.

A computer-readable storage medium is provided in the embodiments of the present disclosure. The computer-readable storage medium has computer-executable instructions stored thereon. The computer-executable instructions may perform the arrester protection method for the fully-controlled valve of the controllable line-commutated converter in the embodiments described above and any optional implementation thereof. The storage medium may include a magnetic disk, an optical disk, a read-only memory (ROM), a random access memory (RAM), a flash memory, a hard disk drive (HDD), or a solid-state drive (SSD). The storage medium may further include a combination of the above types of memories.

A computer program product is also provided in the embodiments of the present disclosure. The computer program product includes a computer program or instructions. The computer program or instructions, upon run on a computer device, enable the computer device to perform the arrester protection method for the fully-controlled valve of the controllable line-commutated converter in the first aspect of the embodiments of the present disclosure and any implementation of the first aspect.

It is apparent that the embodiments described above are merely examples for the purpose of clear description and are not intended to limit the implementations. For those of ordinary skill in the art, other variations or modifications in different forms may be made based on the above description. It is neither necessary nor possible to exhaustively list all possible implementations herein. Apparent variations or modifications derived therefrom are still within the protection scope of the present disclosure.

### Industrial applicability

An arrester protection method and apparatus for a fully-controlled valve of a controllable line-commutated converter, a computer device, a computer-readable storage medium, and a computer program product are provided in the embodiments of the present disclosure. The method includes: monitoring a terminal voltage of a fully-controlled valve in real time; in response to a per-cycle turn-off voltage of a main IGBT valve exceeding an operating voltage of an arrester, subtracting 1 from an available operation count of the arrester for the main IGBT valve, increasing the available operation counts of the arresters by a first preset count at intervals of a first preset time; in response to a per-cycle turn-off voltage of an auxiliary IGBT valve exceeding an operating voltage of an arrester, subtracting 1 from an available operation count of the arrester for the auxiliary IGBT valve; in response to the available operation count of the arrester for the main IGBT valve or the auxiliary IGBT valve being less than a second preset count, controlling the converter to return to a line-commutated operating mode; and in response to the available operation count of the arrester for the main IGBT valve or the auxiliary IGBT valve being greater than a third preset count, controlling the converter to enter a controllable line-commutated operating mode. The schemes described above adopt different protective actions to avoid damage to the arrester for the fully-controlled sub-valve, thereby improving the operation reliability of the converter valve.

## Claims

1. An arrester protection method for a fully-controlled valve of a controllable line-commutated converter, wherein each bridge arm of the converter includes a main branch and an auxiliary branch connected in parallel, the main branch includes a main thyristor valve and a main IGBT valve, the auxiliary branch includes an auxiliary IGBT valve and an auxiliary thyristor valve, each of the main IGBT valve and the auxiliary IGBT valve is connected in parallel with an arrester, and the arrester protection method for the fully-controlled valve of the controllable line-commutated converter comprises:
monitoring a terminal voltage of the fully-controlled valve in real time; subtracting 1 from an available operation count of the arrester for the main IGBT valve in response to a per-cycle turn-off voltage of the main IGBT valve exceeding an operating voltage of the arrester; subtracting 1 from an available operation count of the arrester for the auxiliary IGBT valve in response to a per-cycle turn-off voltage of the auxiliary IGBT valve exceeding an operating voltage of the arrester; increasing the available operation counts of the arresters by a first preset count at intervals of a first preset time;
controlling the converter to return to a line-commutated operating mode in response to the available operation count of the arrester for the main IGBT valve being less than a second preset count; or controlling the converter to return to the line-commutated operating mode in response to the available operation count of the arrester for the auxiliary IGBT valve being less than the second preset count; and
controlling the converter to enter a controllable line-commutated operating mode in response to the available operation count of the arrester for the main IGBT valve being greater than a third preset count; or controlling the converter to enter the controllable line-commutated operating mode in response to the available operation count of the arrester for the auxiliary IGBT valve being greater than the third preset count.

2. The arrester protection method for the fully-controlled valve of the controllable line-commutated converter according to claim 1, wherein the first preset time and the first preset count satisfy the following relationships: $M = W / Ws ,$ $N \leq M ,$ $a \geq b \times \frac{H}{N} ;$ wherein W represents a designed rated energy of the arrester; Ws represents a maximum energy normally absorbed by the arrester in a single operation; N represents an initial value of the available operation count set for the arrester; a represents the first preset time; b represents the first preset count; and H represents a time interval from when the arrester absorbs energy up to a limit once to when the arrester absorbs energy up to the limit again.

3. The arrester protection method for the fully-controlled valve of the controllable line-commutated converter according to claim 1 or 2, wherein in response to the converter operating in the controllable line-commutated operating mode, the arrester protection method for the fully-controlled valve of the controllable line-commutated converter further comprises:
monitoring a terminal voltage of the main IGBT valve in real time;
determining that the arrester for the main IGBT valve is in an overvoltage state in response to the terminal voltage of the main IGBT valve continuously exceeding a first voltage reference value for a third preset time; and
actively triggering the main IGBT valve into conduction.

4. The arrester protection method for the fully-controlled valve of the controllable line-commutated converter according to claim 3, further comprising:
determining that the converter operates abnormally and controlling the converter to permanently revert to the line-commutated operating mode in response to a cumulative number of times that the terminal voltage of the main IGBT valve is higher than a second voltage reference value reaching a fourth preset count within a period of time.

5. The arrester protection method for the fully-controlled valve of the controllable line-commutated converter according to claim 1 or 2, wherein in response to the converter operating in the controllable line-commutated operating mode, the arrester protection method for the fully-controlled valve of the controllable line-commutated converter further comprises:
monitoring a terminal voltage of the auxiliary IGBT valve in real time;
determining that the arrester for the auxiliary IGBT valve is in an overvoltage state in response to the terminal voltage of the auxiliary IGBT valve continuously exceeding a third voltage reference value for a fourth preset time; and
actively triggering the auxiliary IGBT valve into conduction.

6. The arrester protection method for the fully-controlled valve of the controllable line-commutated converter according to claim 5, further comprising:
determining that the converter operates abnormally and controlling the converter to permanently revert to the line-commutated operating mode in response to a cumulative number of times that the terminal voltage of the auxiliary IGBT valve is higher than a fourth voltage reference value reaching a fourth preset count within a period of time.

7. An arrester protection apparatus for a fully-controlled valve of a controllable line-commutated converter, based on the arrester protection method for the fully-controlled valve of the controllable line-commutated converter according to any one of claims 1 to 6, wherein the arrester protection apparatus for the fully-controlled valve of the controllable line-commutated converter comprises:
a monitoring module, configured to: monitor a terminal voltage of the fully-controlled valve in real time; subtract 1 from an available operation count of an arrester for a main IGBT valve in response to a per-cycle turn-off voltage of the main IGBT valve exceeding an operating voltage of the arrester; subtract 1 from an available operation count of an arrester for an auxiliary IGBT valve in response to a per-cycle turn-off voltage of the auxiliary IGBT valve exceeding an operating voltage of the arrester; and increase the available operation counts of the arresters by a first preset count at intervals of a first preset time;
a first switching module, configured to: control the converter to return to a line-commutated operating mode in response to the available operation count of the arrester for the main IGBT valve being less than a second preset count; or control the converter to return to the line-commutated operating mode in response to the available operation count of the arrester for the auxiliary IGBT valve being less than the second preset count; and
a second switching module, configured to: control the converter to enter a controllable line-commutated operating mode in response to the available operation count of the arrester for the main IGBT valve being greater than a third preset count; or control the converter to enter the controllable line-commutated operating mode in response to the available operation count of the arrester for the auxiliary IGBT valve being greater than the third preset count.

8. The arrester protection apparatus for the fully-controlled valve of the controllable line-commutated converter according to claim 7, further comprising:
a first single-cycle continuous overvoltage protection module, configured to: monitor a terminal voltage of the main IGBT valve in real time; determine that the arrester for the main IGBT valve is in an overvoltage state in response to the terminal voltage of the main IGBT valve continuously exceeding a first voltage reference value for a third preset time; and actively trigger the main IGBT valve into conduction; and
a second single-cycle continuous overvoltage protection module, configured to: monitor a terminal voltage of the auxiliary IGBT valve in real time; determine that the arrester for the auxiliary IGBT valve is in an overvoltage state in response to the terminal voltage of the auxiliary IGBT valve continuously exceeding a third voltage reference value for a fourth preset time; and actively trigger the auxiliary IGBT valve into conduction.

9. The arrester protection apparatus for the fully-controlled valve of the controllable line-commutated converter according to claim 8, further comprising:
a first multi-cycle continuous overvoltage protection module, configured to: determine that the converter operates abnormally and control the converter to permanently revert to the line-commutated operating mode in response to a cumulative number of times that the terminal voltage of the main IGBT valve is higher than a second voltage reference value reaching a fourth preset count within a period of time; and
a second multi-cycle continuous overvoltage protection module, configured to: determine that the converter operates abnormally and control the converter to permanently revert to the line-commutated operating mode in response to a cumulative number of times that the terminal voltage of the auxiliary IGBT valve is higher than a fourth voltage reference value reaching the fourth preset count within a period of time.

10. A computer device, comprising: at least one processor, and a memory communicatively connected to the at least one processor, wherein the memory stores instructions executable by the at least one processor, the instructions, upon being executed by the at least one processor, enable the at least one processor to perform the arrester protection method for the fully-controlled valve of the controllable line-commutated converter according to any one of claims 1 to 6.

11. A computer-readable storage medium, wherein the computer-readable storage medium stores computer instructions, the computer instructions are used to enable a computer to perform the arrester protection method for the fully-controlled valve of the controllable line-commutated converter according to any one of claims 1 to 6.

12. A computer program product, comprising a computer program or instructions, wherein the computer program or instructions, upon being run on a computer device, enable the computer device to perform the arrester protection method for the fully-controlled valve of the controllable line-commutated converter according to any one of claims 1 to 6.
